## Europäisches Patentamt

## European Patent Office

## Office européen des brevets

(19)

(11) Veröffentlichungsnummer: **0 011 607**
**B1**

(12) **EUROPÄISCHE PATENTSCHRIFT**

(45) Veröffentlichungstag der Patentschrift:
02.09.81

(21) Anmeldenummer: **79810155.6**

(22) Anmeldetag: **15.11.79**

(51) Int. Cl.³: **C 09 C 3/08**, C 08 K 9/04,
C 09 C 1/00

(54) Metallchromat-Pigmentzusammensetzungen und Verfahren zu ihrer Herstellung.

(30) Priorität: **21.11.78 US 962597**

(43) Veröffentlichungstag der Anmeldung:
**28.05.80 Patentblatt 80/11**

(45) Bekanntmachung des Hinweises auf die Patenterteilung:
**02.09.81 Patentblatt 81/35**

(84) Benannte Vertragsstaaten:
**BE DE FR GB IT NL**

(56) Entgegenhaltungen:
**DE-A-1 569 190**
**DE-B-1 205 217**
**FR-A-2 018 912**
**FR-A-2 225 487**
**FR-A-2 293 241**
**US-A-3 262 802**

(73) Patentinhaber: **CIBA-GEIGY AG, Patentabteilung**
**Postfach, CH-4002 Basel (CH)**

(72) Erfinder: **Ziobrowski, Bernard George, 13 Bullard Avenue,**
**Glens Falls, New York (US)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

BUNDESDRUCKEREI BERLIN

## Metallchromat-Pigmentzusammensetzungen und Verfahren zu ihrer Herstellung

Die vorliegende Erfindung betrifft Metallchromat enthaltende Pigmentzusammensetzungen und insbesondere pulverförmige Metallchromat enthaltende Pigmentzusammensetzungen mit erhöhter Beständigkeit gegen Staubbildung und sehr guter Hitzebeständigkeit in thermoplastischen Systemen, sowie ein Verfahren zu ihrer Herstellung.

Die Metallchromat-Pigmente, unter welchen die Bleichromat-Pigmente die bekanntesten sind, sind relativ billig herstellbar, besitzen gute Pigmenteigenschaften und decken ein breites Nuarcenspektrum, vom stark grünstichigem Gelb, über Orange, bis zu gelbstichigem Rot. Die Bleichromat-Pigmente haben jedoch einige ins Gewicht fallende Nachteile, insbesondere die Tendenz dunker zu werden, sowie mit den Thermoplasten, in denen sie eingearbeitet werden, während der Verarbeitung zu reagieren und/oder sie zu oxidieren. Es ist in der Tat allgemein bekannt, daß Bleichromat-Pigmente zum Pigmentieren von Thermoplasten wie Polyäthylen, Polypropylen oder Polystyrol, welche bei Temperaturen über etwa 200°C verarbeitet werden, nicht eingesetzt werden können, da sie in bedeutendem Maße dunkler werden, und zwar um so dunkler, je höher die Temperatur ist. Zudem werden die Metallchromat-Pigmente und insbesondere die Bleichromat-Pigmente in sehr feinpulveriger Form hergestellt und verarbeitet, was eine sehr sorgfältige Handhabung erfordert um Umweltverschmutzung zu vermeiden. Das Problem der Reinhaltung der Umwelt bei der Handhabung von Chemikalien wie Pigmente ist besonders wichtig und aktuell. Es besteht also ein großes Bedürfnis nach einer Methode, die es erlauben soll, Metallchromat- und insbesondere Bleichromat-Pigmente so zu behandeln, daß die Staubbildung reduziert und die Hitzestabilität erhöht wird, ohne die guten Pigmenteigenschaften und die Dispergierbarkeit zu beeinträchtigen.

Eine Methode zur Verbesserung der Beständigkeit gegenüber chemischen und thermischen Einflüssen ist in der US-PS 3 370 971 beschrieben und besteht im wesentlich im Abscheiden eines durchgehenden Überzugs aus dichtem, amorphem Siliciumoxid, der zwischen 2 und 40 Gew.-% der Gesamtmasse ausmacht, auf die Oberfläche der Bleichromat-Pigmentteilchen, durch Behandeln mit einer wässerigen Lösung von »aktivem« Siliciumoxid bei pH >6. Die nach dieser Methode mit Siliciumoxid beschichteten Pigmente sind wohl für bestimmte Anwendungen geeignet, sie neigen aber stark zur Staubbildung und nach der Einarbeitung in Thermoplasten zeigen sie immer noch eine gewisse Tendenz dunkler zu werden.

Ein Grund für die unbefriedigenden Gebrauchseigenschaften der mit Siliciumoxid beschichteten Pigmenten in thermoplastischen Systemen ist die geringe Abreibfestigkeit der Siliciumoxid-Beschichtung. Bei der konventionellen Pigmentierung von Thermoplasten wird das trockene Pigment mit dem festen granulierten Harz vermischt und die erhaltene Mischung bis zur einwandfreien Homogenität kräftig geknetet. Die drastischen Bedingungen bei der Einarbeitung führen zu einer Abreibung der Siliciumoxidschicht auf der Oberfläche der Bleichromatpigment-Teilchen. Dies hat eine Beeinträchtigung der Beständigkeit des Pigments gegenüber chemischen und thermischen Einflüssen, sowie von dessen Lichtechtheit und damit auch das Dunklerwerden der pigmentierten Thermoplasten zur Folge.

Verschiedene Methoden sind bereits vorgeschlagen worden, um diese Nachteile zu beseitigen. Eine dieser Methoden ist in der US-PS 3 639 133 beschrieben. Dabei wird das Bleichromatpigment vor oder während dem Beschichten mit Siliciumoxid in einer Aufschlämmung starken Scherkräften unterworfen, die zu einem Aufbrechen von Agglomeraten der Rohpigmente führen, so daß diese mit Hilfe von Siliciumoxid wirksamer stabilisiert werden können. Eine andere Methode ist in der US-PS 3 773 535 beschrieben und betrifft das Überziehen der mit Siliciumoxid beschichteten Pigmentteilchen mit einem Polyolefin-Wachs. Eine weitere Methode beschreibt die US-PS 3 470 007. Diese betrifft die Behandlung der mit Siliciumoxid beschichteten Pigmentpartikel mit bestimmten Metallsalzen von Harzsäuren oder von höheren Fettsäuren zum Schutze der Siliciumoxidschicht. Die so behandelten Pigmente besitzen eine bessere Abreibfestigkeit, zeigen jedoch noch beträchtliche Staubbildung und erfordern spezielle Maßnahmen zur Vermeidung der Umweltverschmutzung und der sonst mit staubbildenden Chemikalien zusammenhängenden Nachteile.

In der US-PS 3 373 982 wird ebenfalls eine Methode zur Verbesserung der Hitzebeständigkeit und der Abriebfestigkeit der Bleichromatpigmente beschrieben. Dabei handelt es sich um die Beschichtung vom rohen oder bereits mit Siliciumoxid beschichteten Pigment mit von 1–50 Gew.-%, bezogen auf das Pigment, einer aromatischen Carbonsäure oder eines unlöslichen Metallsalzes, wie beispielsweise eines Calcium-, Barium-, Aluminium- oder Bleisalzes einer aromatischen Carbonsäure. Pigmente, die nach dieser Methode, beispielsweise mit Isophthalsäure oder Calciumisophthalat, behandelt wurden, zeigen wohl eine bessere Hitzebeständigkeit, jedoch kein besseres Verhalten bezüglich Staubbildung. Außerdem wird bei dieser Behandlung die Farbe der Pigmente etwas beeinträchtigt.

In der US-PS 4 115 143 wird eine Methode zur Herstellung von praktisch nicht stäubenden Metallchromat-Pigmenten beschrieben. Diese können erhalten werden durch inniges Vermischen des Rohpigments in wässerigem Medium mit von 2–25 Gew.-%, bezogen auf das Pigment eines unter normalen Bedingungen flüssigen organischen Ester der Phthal- oder Terephthalsäure oder einer Fettsäure. In der Tat zeigen die so erhaltenen Pigmente praktisch keine Staubbildung, sie sind aber bezüglich Hitzestabilität unbefriedigend. Versuche die Hitzestabilität durch Erhöhen des Esteranteils zu verbessern, führten zu feuchten, klebrigen, für die Weiterverarbeitung in konventionellen Anlagen ungeeigneten Pigmentpräparaten.

Verschiedene Literaturstellen weisen darauf hin, daß die Staubbildung bei pulverförmigen Substanzen behoben werden kann, indem man sie durch Kompression oder durch Granulierung in Gegenwart geeigneter Granuliermittel in Tabletten oder Perlen verwandelt. Nichtstäubende Perlen von Pigmentzusammensetzungen enthaltend leichtschmelzende, unter normalen Bedingungen feste Harze als Granuliermittel sind beispielsweise in den GB-PS 1 178 846 und 1 238 118, sowie in den US-PS 4 015 999 und 4 055 439 beschrieben. Pigmentzusammensetzungen in Perlen- oder Granulatform mit hohem Anteil an Pigment können in Thermoplasten nicht so leicht eingearbeitet werden wie die pulverförmigen Pigmente und erfordern wesentlich längere Mischzeiten um die nötige Homogenität der Farbe zu erlangen.

Die Qualität der Metallchromat und insbesondere der Bleichromat enthaltenden Pigmente für die Pigmentierung von Thermoplasten könnte also erhöht werden, wenn ihre Hitzebeständigkeit, ihre Stabilität gegen chemischen Angriff und ihr Verhalten bei der Verarbeitung (Staubbildung) ohne Beeinträchtigung der Pigmenteigenschaften verbessert werden könnte.

Es wurde nun gefunden, daß Metallchromat enthaltende Pigmentzusammensetzungen von guter Dispergierbarkeit erhalten werden können, die überraschenderweise nicht nur verminderte Staubbildung, sondern auch erhöhte Hitzebeständigkeit zeigen, wenn man das Pigment mit einem Gemisch aus bestimmten Metallsalzen von Fettsäuren und bestimmten, unter normalen Bedingungen, d. h. bei Zimmertemperatur, beispielsweise zwischen 15 und 25°C, flüssigen Weichmacher behandelt. Diese Wirkung ist um so mehr überraschend, daß bei der Behandlung der Pigmente mit nur einer Komponente des Gemisches, sei es mit dem Metallsalz der Fettsäure oder mit dem Weichmacher, keine Qualitätsverbesserung erzielt wird.

Dementsprechend betrifft die vorliegende Erfindung pulverförmige Metallchromat enthaltende Pigmentzusammensetzungen mit erhöhter Hitzebeständigkeit in Kunststoffen und verminderter Staubbildungstendenz, bestehend im wesentlichen aus 50—85 Gew.-% eines Metallchromat-Pigments, 7,3—30 Gew.-% von mindestens einem wasserunlöslichen Metallsalz einer Fettsäure mit mindestens 12 C-Atomen, sowie 7,5—20 Gew.-% von mindestens einem unter normalen Bedingungen flüssigen Weichmacher auf Esterbasis.

Die Erfindung betrifft außerdem auch ein Verfahren zur Herstellung einer Pigmentzusammensetzung gemäß obiger Definition, dadurch gekennzeichnet, daß ein Metallchromat-Pigment mit 7,5—30 Gew.-%, bezogen auf die gesamte Pigmentzusammensetzung, von mindestens einem wasserunlöslichen Metallsalz einer Fettsäure mit mindestens 12 C-Atomen und 7,5—20 Gew.-%, bezogen auf die gesamte Pigmentzusammensetzung, von mindestens einem unter normalen Bedingungen flüssigen Weichmacher auf Esterbasis innig vermischt und die so erhaltene Pigmentzusammensetzung isoliert wird.

Die Bezeichnung »pulverförmige Pigmentzusammensetzung« bedeutet eine Pigmentzusammensetzung, die in einer feinen Pulverform mit einer Partikelgröße <100 µm, bevorzugt <50 µm vorliegt. Die Bezeichnungen »Metallchromat-Pigment« oder »Metallchromat« enthaltende »Pigmentzusammensetzung« bedeuten Pigmente oder Pigmentzusammensetzungen, die als Hauptkomponente ein Metallchromat und insbesondere Strontiumchromat, Zinkchromat oder bevorzugt Bleichromat enthalten. Spezifische erfindungsgemäß einzusetzende Bleichromate sind folgende allgemein bekannte in Colour Index aufgeführte Pigmente:

Chromgelb (CI-77 600), basisches Bleichromat (CI-77 601), Bleisulfochromat (CI-77 603), Molybdat-Orange oder Molybdat-Rot (CI-77 605).

Zu den bevorzugten Bleichromaten gehören das stark grünstichige »Primerose Yellow« in rhombischer Modifikation und das relativ reine, monokline Bleichromat, das viel röter und unter der Bezeichnung »Medium Yellow« bekannt ist. Zwischenschattierungen sind in Form von festen Lösungen von Bleichromat und Bleisulfat, im allgemeinen in monokliner Form verfügbar und sind unter der Bezeichnung »Light Yellows« bekannt. Außerdem können noch die verschiedensten festen Lösungen von Bleichromat, Bleisulfat und Bleimolybdat in tetragonaler oder in modifizierter monokliner Modifikation erwähnt werden, die zwischen gelbstichigem Orange und Dunkelrot liegen und unter der Bezeichnung Molybdat-Orange oder Molybdat-Rot bekannt sind.

Bei den erfindungsgemäß einzusetzenden Metallchromat-Pigmenten kann es sich um Rohpigmente handeln oder auch um Pigmente, die bereits einer Nachbehandlung unterworfen wurden, um deren Teilchen beispielsweise mit einem im wesentlichen durchgehenden dichten, amorphen Siliciumoxidüberzug mit oder ohne Aluminiumoxid zu beschichten. Eine solche Nachbehandlung ist in der US-PS 3 370 971 beschrieben. Eine weitere Ausführungsform der vorliegenden Erfindung betrifft das Beschichten der Pigmentteilchen mit einer dichten Siliciumoxidschicht durch gleichzeitigen aber getrennten Zusatz einer Natriumsilicatlösung und einer Mineralsäure-, Ammoniumsulfat- oder Ammoniumchloridlösung zu einer wäßrigen Aufschlämmung des Pigments bei einem pH zwischen 9,0 und 9,5 und bei einer Temperatur von mindestens 60°C, bevorzugt über 75°C. Die als Siliciumdioxid

3

berechnete Menge an eingesetzter Siliciumverbindung variiert von 2 bis 40, bevorzugt von 5 bis 30 und besonders bevorzugt von 15 bis 32 Gew.-%, bezogen auf das Pigment. In einer bevorzugten Ausführungsform der vorliegenden Erfindung besteht die Siliciumoxidschicht aus dichtem amorphem Siliciumoxid, wobei diese Schicht ihrerseits durch eine dünne Schicht, bestehend aus 0,2 bis 10, bevorzugt aus 1 bis 5 Gew.-%, bezogen auf das mit Siliciumoxid beschichtete Pigment, Aluminiumoxid überzogen wird.

Diese zusätzliche Aluminiumoxidschicht verbessert das Verhalten des Pigments bezüglich Staubbildung und erhöht seine Hitzebeständigkeit. Sie wird zweckmäßig erhalten durch Zusatz einer wäßrigen Lösung einer löslichen Aluminiumverbindung, wie beispielsweise Alaun, oder Natriumaluminat zu einer heißen wäßrigen Dispersion des mit Siliciumoxid beschichteten Pigments unter Rühren bis zur vollständigen Abscheidung.

Die erfindungsgemäßen Pigmentzusammensetzungen können nach irgendwelchen bekannten Verfahren zur innigen Vermischung von Flüssigkeiten und feinverteilten Festsubstanzen hergestellt werden. Die Bleichromat-Pigmente, mit oder ohne Siliciumoxid- oder Siliciumoxid/Aluminiumoxid-Beschichtung, können beispielsweise in Form von trockengemahlenen Klumpen, von feuchten Preßkuchen, als Aufschlämmung in Wasser oder in geeigneten organischen Lösungsmitteln oder direkt in der bei der Vorbehandlung mit Siliciumoxid gebildeten Aufschlämmung mit dem Fettsäuresalz und dem Weichmacher vermischt werden, wobei letztere einzeln oder bereits im Gemisch als solche oder in Lösung oder Dispersion in Wasser oder geeigneten organischen Lösungsmitteln zugesetzt werden. Die Mischung wird dann zermahlen oder kräftig verrührt bei Zimmertemperatur in üblichen hochtourigen Mischern während einer Zeit, die von 1 Minute bis 4 Stunden und mehr, vorzugsweise von 5 Minuten bis 2 Stunden variieren kann. Gegebenenfalls, insbesondere beim Arbeiten in wäßrigem Medium, kann die Behandlung in Gegenwart einer kleinen Menge, bevorzugt zwischen 1 und 5 Gew.-%, bezogen auf die gesamte Zusammensetzung, eines Emulgiermittels, wie ein nichtionogenes Emulgiermittel auf Polyätheralkohol-Basis, durchgeführt werden. Das Fettsäuresalz und der Weichmacher können auch direkt eingesetzt werden, beispielsweise durch Versprühen derselben auf das trockene Pigment und nachfolgende Zermahlung des benetzten Pigments in einer hochtourigen Mahlvorrichtung. Unabhängig von der Art und Weise wie Fettsäuresalz und Weichmacher zugesetzt werden, muß jedoch beachtet werden, daß man unter Bedingungen arbeitet, bei denen der Weichmacher in flüssiger Form vorliegt. Im allgemeinen findet die Vermischung bei Zimmer- oder leicht höherer Temperatur statt. Gegebenenfalls kann aber auch bei Temperaturen bis zu höchstens 100° C gearbeitet werden.

Die erhaltene Pigmentzusammensetzung wird nach üblichen Methoden isoliert. Im Falle, daß die Vermischung mit dem Fettsäuresalz und dem Weichmacher durch Anwendung einer Aufschlämmung des Pigments vollzogen wird, wird im allgemeinen die Pigmentzusammensetzung durch Filtrieren oder Abdampfen vom Lösungsmittel getrennt, gegebenenfalls gewaschen und dann bei einer Temperatur von höchstens 100° C getrocknet.

Die erfindungsgemäß zu verwendenden Fettsäuresalze sind die wasserunlöslichen Metallsalze von Fettsäuren, die mindestens 12 und vorzugsweise 12 – 24 C-Atome enthalten. Bevorzugt sind Salze von Metallen der Gruppen II A, II B, III A und VIII des periodischen Systems, von gesättigten aliphatischen Monocarbonsäuren mit 12 bis 24 C-Atomen, die zwischen 40 und 90° C schmelzen. Besonders bevorzugt sind die Zink-, Aluminium-, Magnesium- und Calciumsalze von Lauryl-, Myristin-, Palmitin-, Stearin-, Arachin- und Behensäure, sowie Mischungen derselben.

Die erfindungsgemäß zu verwendenden Weichmacher sind inerte, unter normalen Bedingungen flüssige, schwerflüchtige Ester, die in der Fachwelt allgemein als Poly(vinylchlorid)-Weichmacher bekannt sind, wobei diejenigen mit Siedepunkt über 200° C bevorzugt sind. Es ist eine große Anzahl von Estern bekannt, die diesen Erfordernissen genügt. Besonders geeignet sind jedoch die unter normalen Bedingungen flüssigen Ester von Fettsäuren und gesättigten einwertigen Alkoholen, die Diester von Dicarbonsäuren und gesättigten einwertigen Alkoholen, die Fettsäure- oder Benzolsäureester von Polyolen und die Phosphorsäureester. Bevorzugte Weichmacher sind die Monoester von Fettsäuren mit 12 – 18 C-Atomen in der Alkylgruppe der Fettsäure und 3 bis 8 C-Atomen in der Alkylgruppe des Alkohols, die Dialkyl-, Diaryl-, Alkaryl- oder Alkylarylester von aromatischen oder gesättigten aliphatischen Dicarbonsäuren, die Tetraacylester von Pentaärythritol, die Benzoesäureester von Glykolen und die Trialkyl-, Trialkoxyalkyl-, Triaryl- und Trialkarylphosphorsäureester. Besonders bevorzugte Weichmacher sind Butylstearat, Dibutylphthalat, die Dioctylphthalate, Butyl-octylphthalat, Octyl-decyl-phthalat, Butyl-benzyl-phthalat, Dibutyladipat, Diisooctyladipat, Di-2-ethyl-butyl-azelat, Dibutylsebacat, Dioctylsebacat, das Pentaärythritoltetraester von gemischten $C_4 – C_9$ Carbonsäuren, Pentaärythritol-tetrastearat, Diäthylenglykoldibenzoat, Tributylphosphat, Cresyl-diphenyl-phosphat, Tricresylphosphat, 2-Äthylhexyl-diphenylphosphat und Tridimethylphenylphosphat.

Die erfindungsgemäß einzusetzende Menge an Fettsäuresalz und Weichmacher kann innerhalb der angegebenen Grenzen stark variieren. Eine Menge von je 7,5 Gew.-%, bezogen auf die gesamte Pigmentzusammensetzung, ergibt bereits deutliche Verminderung der Staubbildung und Erhöhung der Hitzebeständigkeit und beide Eigenschaften werden beim Erhöhen des Anteils der beiden Komponenten bis zu je 18 Gew.-% noch zusätzlich verbessert. Bei Mengen von über 20 Gew.-% an Weichmacher und 30% an Fettsäuresalz ist keine weitere Verbesserung feststellbar, im Gegenteil, es werden die Fließeigenschaften der Pigmentzusammensetzung beeinträchtigt. Von der Verwendung größerer Mengen an Fettsäuresalz und Weichmacher wird demnach abgeraten. In einer bevorzugten Ausführungsform der Erfindung wird eine Menge von 8–20, besonders bevorzugt 8–18 Gew.-%, Fettsäuresalz und 8–20, besonders bevorzugt 8–16%, Weichmacher, bezogen auf die gesamte Pigmentzusammensetzung, eingesetzt.

In den nachfolgenden Beispielen bedeuten die Teile, sofern nicht anders angegeben wird, Gewichtsteile, die Prozente Gewichtsprozente und die Temperaturen sind in Celsiusgraden angegeben.

## Beispiel 1

a) In einem Mischer enthaltend eine wäßrige Aufschlämmung mit 70 Teilen Chromgelb (CI-77 600) werden 15 Teile Diäthylenglykol-dibenzoat und 15 Teile Zinkstearat zugegeben und 10 Minuten lang bei hochtourigem Rühren vermischt. Die erhaltene Aufschlämmung wird während 12 Stunden bei 93° getrocknet und dann nach üblichen Methoden zu Pulverform vermahlen. Die erhaltende Pigmentzusammensetzung (Pigment 1) enthält 70% Bleichromat-Pigment, 15% Diäthylenglykoldibenzoat und 15% Zinkstearat.

b) Zwei Vergleichspigmente werden wie in Beispiel 1a) beschrieben hergestellt, mit der Ausnahme, daß in einem Fall das Diäthylenglykol-dibenzoat weggelassen wird und dafür 30 Teile Zinkstearat zugesetzt werden (Pigment A) und im zweiten Fall das Zinkstearat weggelassen wird und statt dessen 30 Teile Diäthylenglykol-dibenzoat zugesetzt werden (Pigment B).

## Vergleichsversuch

Die erfindungsgemäße Pigmentzusammensetzung aus Beispiel 1a) (Pigment 1), die zwei Vergleichspigmente aus Beispiel 1b) (Pigmente A und B), das unbehandelte Ausgangspigment Chromgelb CI-77 600 (Pigment C) und ein handelsübliches mit Siliciumoxid/Aluminiumoxid beschichtetes Chromgelb (70% Toner, Pigment D) wurden bezüglich Hitzebeständigkeit und Staubbildung miteinander verglichen.

## Prüfung der Hitzebeständigkeit

Zu diesem Zweck werden 2 Teile Pigment und 98 Teile Polypropylenschnitzel trocken vermischt und die erhaltene Mischung dreimal durch ein Labor-Extruder bei 204° durchgelassen. Ein Teil des Extruders (1. Versuch) wird in einer Carver-Presse bei 204° und einer Verweilzeit von 60 Sekunden zu Probeplättchen gepreßt. Ein zweiter Teil des Extruders (2. Versuch) wird auf einem thermostatisch geregelten Heizblock während 3 Minuten auf 302° erhitzt und anschließend in einer Carver-Presse bei 204° während 60 Sekunden zu Probeplättchen gepreßt.

Die Hitzebeständigkeit wird erstmal durch visuelle Prüfung und Vergleich der mit den verschiedenen obengenannten Pigmenten gefärbten Probeplättchen des 1. Versuchs bestimmt, unter Verwendung eines Bewertungsmaßstabes für das Dunklerwerden der Proben mit Noten von 1 bis 5, wobei die Note 1 dem saubersten Probeplättchen zugeteilt wird, die Note 2 »eben wahrnehmbar dunkler als 1« und die Noten 3 bis 5 je »zunehmend dunkler« bedeuten.

Zusätzlich werden die Probeplättchen aus dem 1. Versuch mit denjenigen aus dem 2. Versuch bezüglich dem Unterschied der Verfärbung durch Erhöhen der Hitzebehandlungstemperatur von 204 auf 302° verglichen, und zwar unter Verwendung eines Bewertungsmaßstabes mit Noten von »a« bis »e«. Dabei wird die Note »a« dem Pigmentmuster zugeteilt, das den geringsten Verfärbungsunterschied zwischen Versuch 1 und Versuch 2 zeigt, »b« bedeutet ein eben wahrnehmbar größerer Unterschied als »a« und »c«, »d« und »e« bedeuten je einen zunehmend größeren Unterschied.

Die Ergebnisse dieser Vergleichsversuche sind in der nachfolgenden Tabelle I wiedergegeben.

## Prüfung des Staubbildungs-Verhaltens

Eine abgewogene Menge an Pigment wird in eine kleine an einer waagerechten Welle fixierten Schale nahe dem oberen Ende einer senkrechten Kolonne gegeben, die am unteren Ende mit einem Lufteinlaß mit Stromregulierung versehen ist und an deren oberem Ende ein Verbindungsrohr zu einem an Vakuum angeschlossenen feinporigen (millipore) Filter führt. Der Luftstrom wird durch Einstellung des Vakuums auf ein Standard-Maß eingeschaltet, das Pigment wird durch Drehen der Welle aus der Schale geschüttet, wobei es durch die Kolonne entgegen dem aufsteigenden Luftstrom fällt. Der Luftstrom wird während 60 Sekunden beibehalten, und danach wird die sich auf dem Filter abgeschiedene Pigmentmenge durch visuelle Prüfung bestimmt. Stark gefärbte Filter zeigen starke Staubbildung an, während schwach oder nicht gefärbte Filter die im wesentlichen nicht stäubenden Pigmente charakterisieren. Auch zur Bestimmung der Staubbildung verwendet man eine Bewertungsskala mit Noten von 0 bis 5, wobei die Note 0 einem Filter ohne ersichtliche Färbung zugeteilt wird, die Note 1 einem Filter mit eben sichtbarer Färbung und die Noten 2 bis 5 den Filtern mit zunehmend starker Färbung.

Die Ergebnisse dieses Vergleichsversuchs sind ebenfalls in der nachfolgenden Tabelle I wiedergegeben.

Tabelle I

| Pigmentiertes Poly-propylen-Muster | Maximale Einarbeitungs-Temperatur | | Unterschied in der Ver-färbung | Staub-bildung |
|---|---|---|---|---|
| | 204° | 302° | | |
| Pigment 1 | 1 | 1 | a | 0 |
| Pigment A | 1 | 2 | b | 5 |
| Pigment B*) | – | – | – | – |
| Pigment C | 3 | 5 | e | 4 |
| Pigment D | 1 | 3 | c | 5 |

*) Pigment zu feucht, um getestet zu werden.

## Beispiel 2

a) In einem Mischer werden 84 Teile eines Bleichromat-Pigments des Molybdat-Orange-Typus (CI-77 605), 8 Teile Zinkstearat und 8 Teile Dioctylphthalat gegeben und 10 Minuten lang bei hochtourigem Rühren und bei Zimmertemperatur vermischt. Die erhaltene Pigmentzusammensetzung (Pigment 2) besitzt gute Fließeigenschaften und enthält 8% Zinkstearat und 8% Dioctylphthalat, bezogen auf die gesamte Zusammensetzung.

b) Zwei Vergleichspigmente werden wie in Beispiel 2a) beschrieben hergestellt, mit der Ausnahme, daß in einem Fall kein Zinkstearat aber 16 Teile Dioctylphthalat (Pigment E) und im zweiten Fall kein Dioctylphthalat aber 16 Teile Zinkstearat (Pigment F) zugegeben werden.

## Vergleichsversuch

Die erfindungsgemäße Pigmentzusammensetzung aus Beispiel 2a) (Pigment 2), die zwei Vergleichspigmente aus Beispiel 2b) (Pigmente E und F), das unbehandelte Ausgangspigment CI-77 605 (Pigment G) wurden bezüglich Hitzebeständigkeit und Staubbildung nach der unter Beispiel 1 beschriebenen Methode miteinander verglichen.

Die Ergebnisse dieser Vergleichsversuche sind in der nachfolgenden Tabelle II wiedergegeben.

Tabelle II

| Pigmentiertes Poly-propylen-Muster | Maximale Einarbeitungs-Temperatur | | Unterschied in der Ver-färbung | Staub-bildung |
|---|---|---|---|---|
| | 204° | 302° | | |
| Pigment 2 | 1 | 1–2 | a | 1 |
| Pigment E | 2 | 3 | b–c | 1 |
| Pigment F | 2 | 3 | b–c | 5 |
| Pigment G | 3 | 5 | e | 5 |

## Beispiel 3

a) In einem mit Rührer versehenen heizbaren Kessel werden 200 Teile des monoklinen Bleichromat-Pigments »Medium Yellow« CI-77 600 und 4000 Teile Wasser zu einer einheitlichen Aufschlämmung vermischt. Es wird dann soviel Natronlauge zugegeben, bis das pH 9,5 erreicht wird und anschließend auf 95° geheizt. Bei gleichbleibender Temperatur werden gleichzeitig und langsam unter ständigem Rühren innerhalb von 3 Stunden eine Lösung enthaltend 220 Teile Wasserglas (28,5% $SiO_2$, Verhältnis $SiO_2 : Na_2O = 2,2 : 1$) und 9 Teile Natronlauge sowie eine Lösung enthaltend 32 Teile 94%iger Schwefelsäure zufließen gelassen. Es wird während weiteren 30 Minuten bei 95° gerührt und danach 30 Teile hydrathaltiges Aluminiumsulfat (entsprechend 5 Teilen $Al_2O_3$) zugegeben und das pH mit Natronlauge auf 6,0—6,5 eingestellt. Das erhaltene Produkt wird vom wäßrigen Medium abfiltriert, mit Wasser gewaschen, bei 82° getrocknet und dann gemahlen. Das erhaltene Produkt (Pigment I) ist ein Bleichromat, dessen Teilchen mit einem im wesentlichen durchgehenden Überzug aus 23,5% dichtem, amorphem Siliciumoxid und 1,9% Aluminiumoxid, bezogen auf das gesamte trockene Produkt, beschichtet sind.

b) 84 Teile des unter Beispiel 3a) beschriebenen beschichteten Pigments I werden in einem Mischer zusammen mit 8 Teilen Zinkstearat und 8 Teilen Tributylphosphat bei hochtourigem Rühren und bei Zimmertemperatur während 10 Minuten vermischt. Die erhaltene Pigmentzusammensetzung (Pigment 3) besitzt gute Fließeigenschaften und enthält 8% Zinkstearat und 8% Tributylphosphat, bezogen auf die gesamte Zusammensetzung.

c) Ein Vergleichspigment (Pigment H) wird wie in Beispiel 3b) beschrieben hergestellt, mit der Ausnahme, daß kein Zinkstearat aber 16 Teile Tributylphosphat eingesetzt werden.

## Vergleichsversuch

Die erfindungsgemäße Pigmentzusammensetzung aus Beispiel 3b) (Pigment 3), das Vergleichspigment (Pigment H) und das mit Siliciumoxid/Aluminiumoxid beschichtete Pigment I wurden bezüglich Hitzebeständigkeit und Staubbildung nach der in Beispiel 1 beschriebenen Methode miteinander verglichen.

Die Ergebnisse dieser Vergleichsversuche sind in der nachfolgenden Tabelle III wiedergegeben.

Tabelle III

| Pigmentiertes Poly-propylen-Muster | Maximale Einarbeitungs-Temperatur | | Unterschied in der Ver-färbung | Staub-bildung |
|---|---|---|---|---|
| | 204° | 302° | | |
| Pigment 3 | 1 | 2 | a | 1 |
| Pigment H | 1 | 3 | b | 1 |
| Pigment I | 2 | 4 | c | 5 |

## Beispiel 4

350 Teile pulverförmiges Bleisulfochromat-Pigment »Primerse Yellow« CI-77 603 und 60 Teile gemahlenes Zinkstearat werden 1 Stunde lang in einem Konusmischer vermischt. Anschließend werden 51 Teile Tributylphosphat innerhalb von 15 Minuten zugegeben, und zwar durch eine Spritzdüse, die von einer durch die Rotationswelle des Mischers geführte Leitung beschickt wird. Es wird 4 Stunden im Mischer weiterbehandelt und die erhaltene Mischung dann in Trommeln geschüttet. Man erhält eine staubarme Pigmentzusammensetzung (Pigment 4) enthaltend 76% Pigment, 13% Zinkstearat und 11% Tributylphosphat.

## Vergleichsversuch

Die erfindungsgemäße Pigmentzusammensetzung aus diesem Beispiel (Pigment 4), das Ausgangspigment CI-77 603 (Pigment J) und ein handelsübliches mit Siliciumoxid/Aluminiumoxid beschichtetes Präparat vom Ausgangspigment CI-77 603 (Pigment K) wurden bezüglich Hitzebeständigkeit und Staubbildung nach der unter Beispiel 1 beschriebenen Methode miteinander verglichen,

7

mit der Ausnahme, daß statt Polypropylen Polystyrol verwendet wurde, wobei die Temperatur in Extruder und Presse 193° statt 204° und auf dem Heizblock 274° statt 302° betrug.

Die Staubbildung wurde zusätzlich auch quantitativ bestimmt, und zwar durch Digerieren des mit Pigmentstaub verschmutzten Filters in einer Mischung aus Salpeter- und Perchlorsäure, Verdünnen der Mischung auf bestimmtes Volumen und anschließende Bestimmung des Bleigehalts durch Atomabsorption.

Die Ergebnisse dieses Vergleichsversuchs sind in der nachfolgenden Tabelle IV wiedergegeben.

Tabelle IV

| Pigmentiertes Poly-propylen-Muster | Maximale Einarbei-tungs-Temperatur | | Unterschied in der Ver-färbung | Staub-bildung | |
|---|---|---|---|---|---|
| | 193° | 274° | | V[1] | A[2] |
| Pigment 4 | 1 | 1−2 | a | 0 | 0,03 |
| Pigment J | 4 | 5 | c | 5 | 2,3 |
| Pigment K | 2 | . 3 | b | 1 | 0,07 |

[1] Visuelle Bestimmung nach der in Beispiel 1 beschriebenen Methode.
[2] Analytische Bestimmung des abgeschiedenen Staubes in % vom abge-wogenen Versuchsmuster.

## Beispiel 5

Das Verfahren von Beispiel 4 wird wiederholt, mit der Ausnahme, daß anstelle von 350 Teilen Bleisulfochromat CI-77 603, 60 Teilen Zinkstearat und 51 Teilen Tributylphosphat, 500 Teile Bleichromat-Pigment »Medium Yellow« CI-77 600, 100 Teile Zinkstearat und 114 Teile Tributylphosphat verwendet werden. Man erhält eine sehr staubarme Pigmentzusammensetzung (Pigment 5) enthaltend 70% Pigment, 14% Zinkstearat und 16% Tributylphosphat.

## Vergleichsversuch

Die erfindungsgemäße Pigmentzusammensetzung aus diesem Beispiel (Pigment 5), das Ausgangspigment CI-77 600 (Pigment L) und ein handelsübliches mit Siliciumoxid/Aluminiumoxid beschichtetes Präparat von Ausgangspigment CI-77 600 (Pigment M) wurden bezüglich Hitzebeständigkeit nach der in Beispiel 4 beschriebenen Methode und bezüglich Staubbildung nach der in Beispiel 1 beschriebenen Methode miteinander verglichen.

Die Ergebnisse dieses Vergleichsversuchs sind in der nachfolgenden Tabelle V wiedergegeben.

Tabelle V

| Pigmentiertes Poly-propylen-Muster | Maximale Einarbeitungs-Temperatur | | Unterschied in der Ver-färbung | Staub-bildung |
|---|---|---|---|---|
| | 193° | 274° | | |
| Pigment 5 | 1 | 1−2 | a | 1 |
| Pigment L | 4 | 5 | e | 4 |
| Pigment M | 2 | 3 | c | 1 |

## Beispiel 6

a) In einem mit Rührer versehenen heizbaren Kessel werden 200 Teile eines Bleichromat-Pigments des Molybdat-Orange-Typus (CI-77 605) und 2600 Teile Wasser zu einer einheitlichen Aufschlämmung vermischt. Das pH wird dann mit Natronlauge auf 8,5 eingestellt und anschließend wird auf 95° geheizt. Bei gleichbleibender Temperatur werden gleichzeitig und langsam unter ständigem Rühren innerhalb von 4 Stunden eine Lösung enthaltend 203,5 Teile Wasserglas (28,5% $SiO_2$, Verhältnis $SiO_2 : Na_2O = 2,2 : 1$) und 7,3 Teile Natronlauge und eine Lösung enthaltend 23,4 Teile Ammoniumchlorid zufließen gelassen. Es wird während weiteren 30 Minuten bei 95°C gerührt und danach das pH mit Schwefelsäure auf 7,6 eingestellt. Die Aufschlämmung wird dann mit 29,7 Teilen Alaun (entsprechend 5,1 Teile $Al_2O_3$) behandelt und dann das pH mit Natronlauge auf 6,1 eingestellt. Das erhaltene Produkt wird abfiltriert, mit Wasser gewaschen und bei 82° getrocknet und pulverisiert. Das erhaltene Präparat (Pigment N) ist ein Bleisulfochromat/Bleimolybdat-Pigment, dessen Teilchen mit einem im wesentlichen durchgehenden Überzug aus 22% dichtem, amorphem Siliciumoxid und 2% Aluminiumoxid, bezogen auf das gesamte trockene Produkt, beschichtet sind.

b) 76 Teile des Ausgangspigments CI-77 605 von Beispiel 6a), 12 Teile Magnesiumstearat und 12 Teile Isopropylmyristat werden in einem Mischer bei hochtourigem Rühren und bei Zimmertemperatur während 10 Minuten vermischt. Die erhaltene Pigmentzusammensetzung (Pigment 6) besitzt gute Fließeigenschaften und enthält 12% Magnesiumstearat und 12% Isopropylmyristat, bezogen auf die gesamte Zusammensetzung.

c) Zwei Vergleichspigmente werden wie in Beispiel 6b) beschrieben hergestellt, mit der Ausnahme, daß in einem Fall kein Isopropylmyristat aber 24 Teile Magnesiumstearat (Pigment O) und im zweiten Fall kein Magnesiumstearat, aber 24 Teile Isopropylmyristat (Pigment P) eingesetzt werden. Im Falle von Pigment P muß zwar bemerkt werden, daß wegen Zusammenballen und Kleben nicht lange gerührt werden kann.

Vergleichsversuch

Die erfindungsgemäße Pigmentzusammensetzung von Beispiel 6b) (Pigment 6), das mit Siliciumoxid/Aluminiumoxid beschichtete Pigment N von Beispiel 6a), das unbehandelte Pigment CI-77 605 (Pigment Q), sowie die beiden Vergleichspigmente O und P, wurden bezüglich Hitzebeständigkeit nach der in Beispiel 4 angegebenen Methode, jedoch bei Extruder- und Presse-Temperatur von 204°, und bezüglich Staubbildung nach der in Beispiel 1 beschriebenen Methode miteinander verglichen.

Die Ergebnisse dieses Vergleichsversuchs sind in der nachfolgenden Tabelle VI wiedergegeben.

Tabelle VI

| Pigmentiertes Poly-propylen-Muster | Maximale Einarbeitungs-Temperatur | | Unterschied in der Ver-färbung | Staub-bildung |
|---|---|---|---|---|
| | 204° | 274° | | |
| Pigment 6 | 1 | 1 | a | 0 |
| Pigment N | 1 | 3 | c | 5 |
| Pigment O | 1 | 2 | b | 5 |
| Pigment Q | 3 | 5 | e | 4 |
| Pigment P*) | – | – | – | – |

*) Pigment zu feucht, um getestet zu werden.

Beispiel 7

a) 153 Teile Bleisulfochromat-Pigment »Pimerose Yellow« CI-77 603 werden mit 120 Teilen Wasserglas und 21,7 Teilen Alaun wie in Beispiel 6a) beschrieben behandelt. Das erhaltene Produkt (Pigment R) ist ein Bleisulfochromat-Pigment, dessen Teilchen mit einem im wesentlichen durchgehenden Überzug aus 18% dichtem, amorphem Siliciumoxid und 2% Aluminiumoxid, bezogen auf das gesamte trockene Produkt, beschichtet sind.

b) 80 Teile des Ausgangspigments CI-77 603 von Beispiel 7a), 10 Teile Calciumstearat und 10 Teile Dioctyladipat werden in einem Mischer bei hochtourigem Rühren und bei Zimmertemperatur während 10 Minuten vermischt. Die erhaltene Pigmentzusammensetzung (Pigment 7) besitzt gute Fließeigenschaften und enthält 10% Calciumstearat und 10% Dioctyladipat, bezogen auf die gesamte Zusammensetzung.

c) Zwei Vergleichspigmente werden wie in Beispiel 7b) beschrieben hergestellt, mit der Ausnahme, daß in einem Fall kein Dioctyladipat, aber 20 Teile Calciumstearat (Pigment S) und im anderen Fall kein

9

Calciumstearat, aber 20 Teile Dioctyladipat (Pigment T) eingesetzt werden. Im Falle von Pigment T muß zwar bemerkt werden, daß wegen Zusammenballen und Kleben nicht lange gerührt werden kann.

Vergleichsversuch

Die erfindungsgemäße Pigmentzusammensetzung von Beispiel 7b) (Pigment 7), das mit Siliciumoxid/Aluminiumoxid beschichtete Pigment R von Beispiel 7a), das unbehandelte Pigment CI-77 603 (Pigment U), sowie die beiden Vergleichspigmente S und T wurden bezüglich Hitzebeständigkeit und Staubbildung wie in Beispiel 6 beschrieben miteinander verglichen.
Die Ergebnisse dieses Vergleichsversuchs sind in der nachfolgenden Tabelle VII wiedergegeben.

Tabelle VII

| Pigmentiertes Poly-propylen-Muster | Maximale Einarbeitungs-Temperatur | | Unterschied in der Ver-färbung | Staub-bildung |
|---|---|---|---|---|
| | 204° | 274° | | |
| Pigment 7 | 1 | 1 | a | 0 |
| Pigement R | 2 | 4 | c | 5 |
| Pigment S | 1 | 2 | b | 5 |
| Pigment U | 3 | 5 | e | 4 |
| Pigment T*) | — | — | — | — |

*) Pigment zu feucht, um getestet zu werden.

Beispiel 8

a) 100 Teile Bleichromat-Pigment »Medium Yellow« CI-77 600 werden mit 120 Teilen Wasserglas und 16,3 Teilen Alaun wie in Beispiel 6a) beschrieben behandelt. Das erhaltene Produkt (Pigment V) ist ein Bleichromat-Pigment, dessen Teilchen mit einem im wesentlichen durchgehenden Überzug aus 25% dichtem, amorphem Siliciumoxid und 2% Aluminiumoxid, bezogen auf das gesamte trockene Produkt, beschichtet sind.
b) In einem mit Rührer versehenen heizbaren Kessel werden 73 Teile des Ausgangspigments CI-77 600 von Beispiel 8a) in 1500 Teilen Wasser aufgeschlämmt. Die Aufschlämmung wird auf 75° geheizt und mit 15,5 Teilen Natriumstearat besprüht. Nach 15 Minuten Rühren wird eine Zinknitratlösung entsprechend einem Gehalt von 4,1 Teilen ZnO innerhalb von 15 Minuten zufließen gelassen. Anschließend wird das pH mit Natronlauge auf 6,0 eingestellt und eine Emulsion von 11 Teilen Isopropylmyristat in einer 70° heißen Lösung von 1,3 Teilen eines Aminsalzes von Dodecylbenzol-sulfonsäure in 75 Teilen Wasser langsam zufließen gelassen. Die Aufschlämmung wird danach mit einer einem Gehalt von 0,64 Teilen $Al_2O_3$ entsprechenden Menge Alaunlösung behandelt und das pH wird mit Natronlauge auf 5,2 eingestellt. Das Produkt wird filtriert, mit Wasser gewaschen, getrocknet bei 93° und gemahlen. Man erhält eine Pigmentzusammensetzung (Pigment 8) mit guten Fließeigenschaften, die 16% Zinkstearat und 11% Isopropylmyristat enthält.
c) 73 Teile des Ausgangspigments CI-77 600 werden in 1500 Teilen Wasser aufgeschlämmt. Die Aufschlämmung wird auf 75°C geheizt und mit 31 Teilen Natriumstearat besprüht. Nach 15 Minuten Rühren wird eine Zinknitratlösung entsprechend einem Gehalt von 8,2 Teilen ZnO innerhalb 15 Minuten zufließen gelassen. Anschließend wird das pH mit Natronlauge auf 6,0 eingestellt und die Aufschlämmung mit einer einem Gehalt von 0,64 Teilen $Al_2O_3$ entsprechenden Menge Alaunlösung behandelt. Danach wird das pH mit Natronlauge auf 5,2 eingestellt. Das Produkt wird filtriert, mit Wasser gewaschen, bei 93° getrocknet und gemahlen. Man erhält eine Pigmentzusammensetzung (Pigment W) enthaltend 27% Zinkstearat, bezogen auf das gesamte trockene Produkt.
d) 73 Teile des Ausgangspigments CI-77 600 werden in 1500 Teilen Wasser aufgeschlämmt. Die Aufschlämmung wird auf 75° geheizt und eine Emulsion von 22 Teilen Isopropylmyristat in einer 70° heißen Lösung von 2,6 Teilen eines Aminsalzes von Dodecylbenzol-sulfonsäure in 75 Teilen Wasser langsam zufließen gelassen. Anschließend wird eine einem Gehalt von 0,64 Teilen $Al_2O_3$ entsprechende Menge Alaunlösung langsam zugegeben und das pH mit Natronlauge auf 5,2 eingestellt. Das erhaltene Produkt (Pigment X) ist klebrig und schwer filtrierbar. Nach dem Waschen mit Wasser und Trocknen bei 93° bleibt es weiterhin klebrig und eignet sich nicht zur Einarbeitung in Polymeren.

# 0 011 607

Vergleichsversuch

Die erfindungsgemäße Pigmentzusammensetzung von Beispiel 8b) (Pigment 8), das mit Siliciumoxid/Aluminiumoxid beschichtete Pigment V von Beispiel 8a), das mit Zinkstearat behandelte Pigment W von Beispiel 8c), das unbehandelte Ausgangspigment CI-77 600 (Pigment Y) und das mit Isopropylmyristat behandelte Pigment X von Beispiel 8d) wurden bezüglich Hitzebeständigkeit und Staubbildung wie in Beispiel 6 beschrieben miteinander verglichen.

Die Ergebnisse dieses Vergleichsversuchs sind in der nachfolgenden Tabelle VIII wiedergegeben.

Tabelle VIII

| Pigmentiertes Poly- propylen-Muster | Maximale Einarbeitungs- Temperatur | | Unterschied in der Ver- färbung | Staub- bildung |
|---|---|---|---|---|
| | 204° | 274° | | |
| Pigment 8 | 1 | 1−2 | a | 0 |
| Pigment V | 2 | 3 | c | 4 |
| Pigment W | 1 | 2 | b | 5 |
| Pigment Y | 3 | 4 | e | 4 |
| Pigment X*) | − | − | − | − |

*) Pigment zu feucht, um getestet zu werden.

Obige Beispiele und Tabellen zeigen deutlich, daß die erfindungsgemäßen Pigmentzusammensetzungen sowohl bezüglich Hitzebeständigkeit als auch bezüglich Staubbildung klare Vorteile bieten, die durch Zusatz von nur einem Fettsäuresalz oder nur einem Weichmacher und auch mit dem alleinigen Siliciumoxid/Aluminiumoxid-Überzug nicht gewährleistet werden.

## Patentansprüche

1. Pulverförmige Metallchromat enthaltende Pigmentzusammensetzungen mit erhöhter Hitzebeständigkeit in Kunststoffen und verminderter Staubbildungstendenz, bestehend im wesentlichen aus 50−85 Gew.-% eines Metallchromat-Pigments, 7,5−30 Gew.-% von mindestens einem wasserunlöslichen Metallsalz einer Fettsäure mit mindestens 12 C-Atomen, sowie 7,5−20 Gew.-% von mindestens einem unter normalen Bedingungen flüssigen Weichmacher auf Esterbasis.

2. Pigmentzusammensetzungen gemäß Anspruch 1, dadurch gekennzeichnet, daß das Metallchromat Bleichromat ist.

3. Pigmentzusammensetzungen gemäß Anspruch 1, dadurch gekennzeichnet, daß das Metallsalz ein Zinksalz einer Fettsäure mit 12−24 C-Atomen ist.

4. Pigmentzusammensetzungen gemäß Anspruch 3, dadurch gekennzeichnet, daß das Zinksalz Zinkstearat ist.

5. Pigmentzusammensetzungen gemäß Anspruch 1, dadurch gekennzeichnet, daß der Weichmacher aus der Gruppe der Ester von Fettsäuren und gesättigten einwertigen Alkoholen, Diester von Dicarbonsäuren und gesättigten einwertigen Alkoholen, Fettsäureester von Polyolen, Benzoesäureester von Polyolen und Phosphorsäureester gewählt wird.

6. Pigmentzusammensetzungen gemäß Anspruch 1, dadurch gekennzeichnet, daß das Bleichromat-Pigment ein bereits vorbehandeltes Pigment ist, dessen Teilchen mit einem im wesentlichen durchgehenden, dichten, amorphen Siliciumoxidüberzug mit oder ohne Aluminiumoxid beschichtet sind.

7. Verfahren zur Herstellung einer Pigmentzusammensetzung gemäß Anspruch 1, dadurch gekennzeichnet, daß ein Metallchromat-Pigment mit 7,5−30 Gew.-%, bezogen auf die gesamte Pigmentzusammensetzung, von mindestens einem wasserunlöslichen Metallsalz einer Fettsäure mit mindestens 12 C-Atomen und 7,5−20 Gew.-%, bezogen auf die gesamte Pigmentzusammensetzung, von mindestens einem unter normalen Bedingungen flüssigen Weichmacher auf Esterbasis innig vermischt und die so erhaltene Pigmentzusammensetzung isoliert wird.

8. Verfahren gemäß Anspruch 7, dadurch gekennzeichnet, daß die Vermischung in wäßrigem Medium durchgeführt wird.

11

9. Verfahren gemäß Anspruch 7, dadurch gekennzeichnet, daß das Bleichromat-Pigment in trockener Form mit dem Metallsalz und dem Weichmacher vermischt wird.

**Claims**

1. A pulverulent metal-chromate-containing pigment composition having improved heat stability in plastics and reduced tendency to form dust, said composition consisting essentially of 50 – 85% by weight of a metal chromate pigment, 7.5 – 30% by weight of at least one water-insoluble metal salt of a fatty acid containing at least 12 C atoms, as well as 7.5 – 20% by weight of at least one ester-based plasticiser liquid under normal conditions.

2. A pigment composition according to Claim 1, wherein the metal chromate is lead chromate.

3. A pigment composition according to Claim 1, wherein the metal salt is a zinc salt of a fatty acid containing 12 – 24 C atoms.

4. A pigment composition according to Claim 3, wherein the zinc salt is zinc stearate.

5. A pigment composition according to Claim 1, wherein the plasticiser is selected from the group comprising esters of fatty acids and saturated monohydric alcohols, diesters of dicarboxylic acids and saturated monohydric alcohols, fatty acid esters of polyols, benzoic acid esters of polyols and phosphoric acid esters.

6. A pigment composition according to Claim 1, wherein the lead chromate pigment is an already pretreated pigment of which the particles are coated with a substantially continuous, dense, amorphous silicon oxide coating, with or without aluminium oxide.

7. A process for producing a pigment composition according to Claim 1, which process comprises intimately mixing a metal chromate pigment with 7.5 – 30% weight, relative to the total pigment composition, of at least one water-insoluble metal salt of a fatty acid containing at least 12 C atoms, and 7.5 – 20% by weight, relative to the total pigment composition, of at least one ester-based plasticiser liquid under normal conditions; and subsequently isolating the pigment composition thus obtained.

8. A process according to Claim 7, wherein the mixing together of the constituents is carried out in an aqueous medium.

9. A process according to Claim 7, wherein the lead chromate pigment is mixed in the dry state with the metal salt and the plasticiser.

**Revendications**

1. Compositions pigmentaires pulvérulentes contenant un chromate métallique, ayant une stabilité à la chaleur améliorée dans des matières plastiques et une moindre tendance à engendrer de la poussière, compositions qui sont essentiellement constituées de 50 à 85% en poids d'un pigment à base d'un chromate métallique, de 7,5 à 30% en poids d'au moins un sel métallique, insoluble dans l'eau, dérivant d'un acide gras à au moins 12 atomes de carbone, ainsi que de 7,5 à 20% en poids d'au moins un plastifiant à base d'un ester, liquide dans les conditions normales.

2. Compositions pigmentaires selon la revendication 1, caractérisées en ce que le chromate métallique est le chromate de plomb.

3. Compositions pigmentaires selon la revendication 1, caractérisées en ce que le sel métallique est un sel de zinc d'un acide gras contenant de 12 à 24 atomes de carbone.

4. Compositions pigmentaires selon la revendication 3, caractérisées en ce que le sel de zinc est le stéarate de zinc.

5. Compositions pigmentaires selon la revendication 1, caractérisées en ce que le plastifiant est pris dans l'ensemble constitué par les esters d'acides gras et de mono-alcools saturés, les diesters d'acides dicarboxyliques et de mono-alcools saturés, les esters d'acides gras et de polyols, les esters de l'acide benzoïque et de polyols, et les esters de l'acide phosphorique.

6. Compositions pigmentaires selon la revendication 1, caractérisées en ce que le pigment au chromate de plomb est un pigment qui a déjà été traité préalablement et dont les particules sont revêtues d'une couche de silice amorphe, compacte et pratiquement continue, avec ou sans alumine.

7. Procédé de préparation d'une composition pigmentaire selon la revendication 1, caractérisé en ce qu'on mélange intimement un pigment à base d'un chromate métallique avec de 7,5 à 30% en poids, par rapport à la composition pigmentaire totale, d'au moins un sel métallique, insoluble dans l'eau, dérivant d'un acide gras à au moins 12 atomes de carbone, et de 7,5 à 20% en poids, par rapport à la composition totale, d'au moins un plastifiant, liquide dans les conditions normales, à base d'un ester, et on isole la composition pigmentaire ainsi obtenue.

8. Procédé selon la revendication 7, caractérisé en ce qu'on effectue mélangeage en milieu aqueux.

9. Procédé selon la revendication 7, caractérisé en ce qu'on mélange le pigment à base d'un chromate de plomb à l'état sec avec le sel métallique et le plastifiant.